# EUROPEAN PATENT APPLICATION

(11) **EP 4 765 577 A1**
(43) Date of publication of application: **24.06.2026**
(21) Application number: 25221397.0
(22) Date of filing: 08.12.2025
(51) Int. Cl.: H02J 7/62, H02J 7/60, H02J 7/00

(54) **BATTERY PACK AND ENERGY STORAGE SYSTEM**

(30) Priority: 19.12.2024 CN 202411889977
(71) Applicant: Huawei Technologies Co., Ltd., Shenzhen, Guangdong 518129 (CN)
(72) Inventor: LI, Zhuang, Shenzhen 518129 (CN); LIU, Guodong, Shenzhen 518129 (CN); GUO, Haobo, Shenzhen 518129 (CN); WANG, Le, Shenzhen 518129 (CN); ZHANG, Zhanjing, Shenzhen 518129 (CN)
(74) Representative: Isarpatent

(57) **Abstract**

Embodiments of this application disclose a battery pack and an energy storage system, and relate to the field of power electronics technologies, to resolve a problem of how to implement overcurrent protection for a cell in a battery pack with a fast response speed, a simple circuit topology, and low costs. The battery pack includes a cell (110), where an emitter or a source of a first switching transistor (Q1) is connected to a positive electrode of the cell, and a first resistor (R1) and a second resistor (R2) are connected in series between a collector or a drain of the first switching transistor and a negative electrode of the cell; a third resistor (R3) is connected between the negative electrode of the cell and an emitter or a source of a second switching transistor (Q2), a collector or a drain of the second switching transistor is connected to an anode of a first Zener diode (ZD1), and a fourth resistor (R4) and a fifth resistor (R5) are connected in series between a cathode of the first Zener diode and the positive electrode of the cell; and a connection point between the first resistor and the second resistor is connected to a base or a gate of the second switching transistor, and a connection point between the fourth resistor and the fifth resistor is connected to a base or a gate of the first switching transistor.

## Description

### TECHNICAL FIELD

This application relates to the field of power electronics technologies, and in particular, to a battery pack and an energy storage system.

### BACKGROUND

A battery pack includes a cell. In a process of charging or discharging the cell, a charging current or a discharging current of the cell may be greater than a current threshold (which may also be referred to as overcurrent (overcurrent) or over current of the cell). For example, when the cell discharges and a load is abnormal, the discharging current of the cell may be greater than the current threshold, and the current threshold may be referred to as an overcurrent protection point of the cell. When the charging current or the discharging current of the cell is greater than the current threshold, the cell may be damaged, or even personal safety may be endangered.

The battery pack may include a circuit that includes a resistor and an operational amplifier to detect the charging current or the discharging current of the cell, or may include a Hall current sensor or a transformer to detect the charging current or the discharging current of the cell. Then, when it is detected that the charging current or the discharging current of the cell is greater than the current threshold, the cell is controlled to be disconnected from a load or direct current power supply, thereby implementing overcurrent protection for the cell, avoiding damage to the cell, avoiding endangering personal safety, and improving reliability and safety of the battery pack.

However, the operational amplifier has a delay and a slow response speed. The Hall current sensor has a high price, a low bandwidth, and a slow response speed. The transformer has a large size and high costs. In conclusion, in a process of detecting the charging current or the discharging current of the cell in the foregoing manner to implement overcurrent protection for the cell, there are problems of slow response speed, large size, and high costs. Therefore, how to implement overcurrent protection for a cell in a battery pack with a fast response speed, a simple circuit topology, and low costs becomes an urgent problem to be resolved.

### SUMMARY

Embodiments of this application provide a battery pack and an energy storage system, to resolve a problem of how to implement overcurrent protection for a cell in a battery pack with a fast response speed, a simple circuit topology, and low costs.

To achieve the foregoing objectives, the following technical solutions are used in embodiments of this application.

According to a first aspect of embodiments of this application, a battery pack is provided. The battery pack includes: a cell; a first switching transistor, a first resistor, and a second resistor, where an emitter or a source of the first switching transistor is connected to a positive electrode of the cell, and the first resistor and the second resistor are connected in series between a collector or a drain of the first switching transistor and a negative electrode of the cell; and a third resistor, a second switching transistor, a first Zener diode, a fourth resistor, and a fifth resistor, where the third resistor is connected between the negative electrode of the cell and an emitter or a source of the second switching transistor, a collector or a drain of the second switching transistor is connected to an anode of the first Zener diode, and the fourth resistor and the fifth resistor are connected in series between a cathode of the first Zener diode and the positive electrode of the cell. A connection point between the first resistor and the second resistor is connected to a base or a gate of the second switching transistor, a connection point between the fourth resistor and the fifth resistor is connected to a base or a gate of the first switching transistor, and the positive electrode of the cell and the anode of the first Zener diode are configured to connect to a load or direct current power supply. The first switching transistor is a PNP transistor, a PMOS, or a PIGBT, and the second switching transistor is an NMOS or an NIGBT.

According to this solution, in the battery pack, due to features of the first resistor to the fifth resistor, the first Zener diode, the first switching transistor, and the second switching transistor, the first Zener diode, the first switching transistor, and the second switching transistor can be immediately turned off when overcurrent occurs in the cell, so that a loop between the positive electrode and the negative electrode of the cell is disconnected, to implement overcurrent protection for the cell. In a process of implementing overcurrent protection for a cell by using an operational amplifier, a Hall current sensor, or a transformer, these components cause a slow response speed, a large size, and high costs. Compared with these components, components used in this embodiment of this application have a faster response speed, a smaller size, and lower costs, so that overcurrent protection for the cell can be implemented with a fast response speed, a simple circuit topology, and low costs.

With reference to the first aspect, in a possible implementation, the battery pack further includes a second Zener diode, an anode of the second Zener diode is connected to the negative electrode of the cell, and a cathode of the second Zener diode is connected to the base or the gate of the second switching transistor.

According to this solution, the second Zener diode can protect the second switching transistor, so that reliability of the battery pack can be improved.

With reference to the first aspect, in a possible implementation, the battery pack further includes a switch, and the switch is connected between the positive electrode of the cell and the collector or the drain of the first switching transistor.

According to this solution, when overcurrent occurs in the cell, the second switching transistor is turned off, and the overcurrent phenomenon of the cell disappears after a period of time, a normal operating state of the cell can be restored by turning on the switch.

With reference to the first aspect, in a possible implementation, the battery pack further includes a switch and a sixth resistor, and the switch and the sixth resistor are connected in series between the positive electrode of the cell and the base or the gate of the second switching transistor.

According to this solution, when overcurrent occurs in the cell, the second switching transistor is turned off, and the overcurrent phenomenon of the cell disappears after a period of time, a normal operating state of the cell can be restored by turning on the switch.

With reference to the first aspect, in a possible implementation, the switch is configured to be periodically turned on, to periodically turn on the second switching transistor.

According to this solution, the switch is periodically turned on, to periodically turn on the second switching transistor. In this case, the normal operating state of the cell can be restored in a timely manner when the overcurrent occurs in the cell, the second switching transistor is turned off, and the overcurrent phenomenon of the cell disappears after a period of time.

With reference to the first aspect, in a possible implementation, the switch is an optical coupler.

According to this solution, the optical coupler is used as the switch, so that a strong-current circuit and a weak-current circuit can be isolated, interference caused by the strong-current circuit to the weak-current circuit can be reduced, and stability of the battery pack can be improved.

With reference to the first aspect, in a possible implementation, the battery pack further includes a signal generator, an output end of the signal generator is connected to a controlled end of the switch, and the signal generator is a phase inverter.

According to this solution, the signal generator generates a control signal to control the switch to be periodically turned on, to periodically turn on the second switching transistor. In this case, the normal operating state of the cell can be restored in a timely manner when the overcurrent occurs in the cell, the second switching transistor is turned off, and the overcurrent phenomenon of the cell disappears after a period of time. In addition, the phase inverter is used as the signal generator, so that no software needs to be designed, and design complexity can be reduced; and a circuit is simple and small, so that costs of the battery pack can be reduced.

According to a second aspect of embodiments of this application, an energy storage system is provided. The energy storage system includes a battery pack and a power converter connected to the battery pack. The battery pack is the battery pack according to the first aspect or any one of the possible implementations of the first aspect. The power converter is configured to perform power conversion on a direct current output by the battery pack.

For descriptions of the second aspect in this application, refer to the detailed descriptions of the first aspect. In addition, for beneficial effects of the second aspect, refer to beneficial effect analysis of the first aspect. Details are not described herein again.

### BRIEF DESCRIPTION OF DRAWINGS

FIG. 1 is a schematic of a circuit topology of a battery pack according to an embodiment of this application;
FIG. 2 is a schematic of another circuit topology of a battery pack according to an embodiment of this application;
FIG. 3 is a schematic of still another circuit topology of a battery pack according to an embodiment of this application;
FIG. 4 is a schematic of yet another circuit topology of a battery pack according to an embodiment of this application;
FIG. 5 is a schematic of yet another circuit topology of a battery pack according to an embodiment of this application; and
FIG. 6 is a schematic of yet another circuit topology of a battery pack according to an embodiment of this application.

### DESCRIPTION OF EMBODIMENTS

The making and use of embodiments are discussed in detail below. The discussed specific embodiments are merely used to describe specific manners to implement and use this specification and this technology, and do not limit the scope of this application.

Unless otherwise defined, all technical terms used in this specification have the same meanings as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during an operation. Therefore, even when a specified circuit/component is currently not operable (for example, not started), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "a plurality of" means two or more than two. A character "/" generally represents an "or" relationship between associated objects. In addition, in embodiments of this application, terms such as "first" and "second" do not limit a quantity or an order.

In this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

To resolve a problem of how to implement overcurrent protection for a cell in a battery pack with a fast response speed, a simple circuit topology, and low costs, embodiments of this application provide a battery pack. In a process of implementing overcurrent protection for a cell by using an operational amplifier, a Hall current sensor, or a transformer, these components cause a slow response speed, a large size, and high costs. In the battery pack provided in embodiments of this application, overcurrent protection for a cell is implemented by using a switching transistor, a resistor, and a Zener diode (Zener diode, ZD), so that the overcurrent protection for the cell in the battery pack can be implemented with a fast response speed, a simple circuit topology, and low costs.

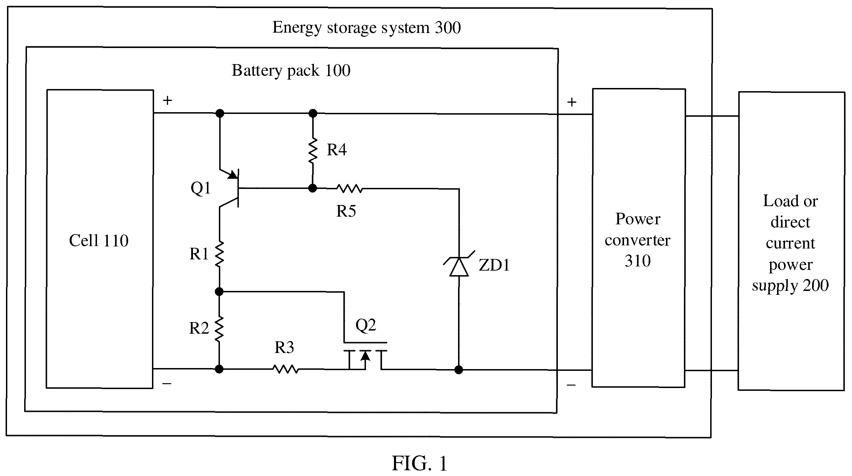

As shown in FIG. 1, a battery pack 100 provided in an embodiment of this application may be used as an independent device. A positive electrode and a negative electrode of the battery pack 100 are configured to connect to a load or direct current power supply 200. When the load or direct current power supply 200 is a load, the load or direct current power supply 200 may include a motor in an electric vehicle. When the load or direct current power supply 200 is a direct current power supply, the load or direct current power supply 200 may include a photovoltaic (photovoltaic, PV) array.

Refer to FIG. 1. The battery pack 100 provided in this embodiment of this application may also be used in an energy storage system 300. The energy storage system 300 further includes a power converter 310 connected to the battery pack 100. The power converter 310 is configured to connect to the load or direct current power supply 200. The power converter 310 is configured to perform power conversion on a direct current output by the direct current power supply to supply power to the battery pack 100, or perform power conversion on a direct current output by the battery pack 100 to supply power to the load. The energy storage system 300 may be at least one of a photovoltaic energy storage system, a wind power energy storage system, or a power station energy storage system. This is not limited in embodiments of this application.

In a possible embodiment, the energy storage system 300 may include a plurality of battery packs 100. The plurality of battery packs 100 may be connected in series, or may be connected in parallel, or may be connected in a hybrid manner. Hybrid connection is a connection manner including both a series connection and a parallel connection. A specific quantity of battery packs 100 included in the energy storage system 300 and a specific connection manner between the plurality of battery packs 100 are not limited in embodiments of this application. Still refer to FIG. 1. In this embodiment of this application, an example in which the energy storage system 300 includes one battery pack 100 is used for description.

Still refer to FIG. 1. The battery pack 100 provided in this embodiment of this application includes: a cell 110; a first switching transistor Q1, a first resistor R1, and a second resistor R2, where an emitter (emitter, E) or a source (source, S) of the first switching transistor Q1 is connected to a positive electrode of the cell 110, and the first resistor R1 and the second resistor R2 are connected in series between a collector (collector, C) or a drain (drain, D) of the first switching transistor Q1 and a negative electrode of the cell 110; and a third resistor R3, a second switching transistor Q2, a first Zener diode ZD1, a fourth resistor R4, and a fifth resistor R5, where the third resistor R3 is connected between the negative electrode of the cell 110 and an emitter or a source of the second switching transistor Q2, a collector or a drain of the second switching transistor Q2 is connected to an anode of the first Zener diode ZD1, and the fourth resistor R4 and the fifth resistor R5 are connected in series between a cathode of the first Zener diode ZD1 and the positive electrode of the cell 110. A connection point between the first resistor R1 and the second resistor R2 is connected to a base (base, B) or a gate (gate, G) of the second switching transistor Q2, a connection point between the fourth resistor R4 and the fifth resistor R5 is connected to a base or a gate of the first switching transistor Q1, and the positive electrode of the cell 110 and the anode of the first Zener diode ZD1 are configured to connect to the load or direct current power supply 200.

The first switching transistor Q1 is a PNP transistor, a P-channel metal-oxide semiconductor field-effect transistor (p-channel metal-oxide-semiconductor field-effect transistor, PMOS), or a P-channel insulated gate bipolar transistor (p-channel insulated gate bipolar transistor, PIGBT), and the second switching transistor Q2 is an NMOS or an NIGBT. Specific types of the first switching transistor Q1 and the second switching transistor Q2 are not limited in embodiments of this application. Still refer to FIG. 1. In this embodiment of this application, an example in which the first switching transistor Q1 is a PNP transistor and the second switching transistor Q2 is an NMOS is used for description.

Still refer to FIG. 1. In a process in which the direct current power supply charges the cell 110 or the cell 110 discharges to the load, a process of implementing overcurrent protection for the cell 110 in the battery pack 100 provided in this embodiment of this application includes:

When no overcurrent occurs in the cell 110, a voltage drop of the third resistor R3 is less than or equal to a voltage threshold, a reverse voltage of the first Zener diode ZD1 is greater than or equal to a Zener voltage of the first Zener diode ZD1, and the first Zener diode ZD1 is in an on state. A voltage applied to the base of the first switching transistor Q1 after voltage division by the fourth resistor R4 and the fifth resistor R5 is less than a voltage of the emitter of the first switching transistor Q1, and the first switching transistor Q1 is in an on state. A voltage applied to the gate of the second switching transistor Q2 after voltage division by the first resistor R1 and the second resistor R2 controls the second switching transistor Q2 to be in an on state. In this case, a loop can be formed between the positive electrode and the negative electrode of the cell 110, and the cell 110 can be normally charged or discharged.

When overcurrent occurs in the cell 110, a voltage drop of the third resistor R3 is greater than the foregoing voltage threshold, a reverse voltage of the first Zener diode ZD1 is less than a Zener voltage of the first Zener diode ZD1, and the first Zener diode ZD1 is to be turned off. The fourth resistor R4 and the fifth resistor R5 no longer perform voltage division, a voltage applied to the base of the first switching transistor Q1 is equal to a voltage applied to the emitter of the first switching transistor Q1, and the first switching transistor Q1 is to be turned off. The first resistor R1 and the second resistor R2 no longer perform voltage division, and a voltage applied to the gate of the second switching transistor Q2 controls the second switching transistor Q2 to be turned off. In this case, the loop between the positive electrode and the negative electrode of the cell 110 can be disconnected, to implement overcurrent protection for the cell 110.

In a possible embodiment, third resistors R3 with different resistance values or first Zener diodes ZD1 with different Zener voltages may be selected to adjust the foregoing voltage threshold, so that an overcurrent protection point of the cell 110 can be adjusted. In embodiments of this application, a specific resistance value of the third resistor R3 and a specific Zener voltage of the first Zener diode ZD1 are not limited, and a specific value of a Zener threshold is not limited.

In a possible embodiment, the battery pack 100 may include a plurality of cells 110. The plurality of cells 110 may be connected in series, or may be connected in parallel, or may be connected in a hybrid manner. A specific quantity of cells 110 included in the battery pack 100 and a specific connection manner between the plurality of cells 110 are not limited in embodiments of this application. Still refer to FIG. 1. In this embodiment of this application, an example in which the battery pack 100 includes one cell 110 is used for description.

In a possible embodiment, the foregoing resistor (any one of the first resistor R1 to the fifth resistor R5) may include a plurality of resistors, and the plurality of resistors may be connected in series, in parallel, or in a hybrid manner. A specific quantity of resistors included in the resistor and a specific connection manner between the plurality of resistors are not limited in embodiments of this application.

In a possible embodiment, the battery pack 100 may further include a capacitor connected in parallel to the foregoing resistor (any one of the first resistor R1 to the fifth resistor R5). The capacitor is configured to perform decoupling, so that functions such as stabilizing a voltage of the cell 110 and improving an anti-interference capability of the battery pack 100 can be implemented.

In a possible embodiment, a circuit topology and a solution of overcurrent protection for the cell 110 provided in this embodiment of this application may also be applied to a device in which overcurrent protection for a direct current bus needs to be performed, such as an optimizer, a photovoltaic inverter, or an uninterruptible power supply (uninterruptible power supply, UPS). This is not limited in embodiments of this application.

According to the battery pack 100 provided in this embodiment of this application, due to features of the first resistor R1 to the fifth resistor R5, the first Zener diode ZD1, the first switching transistor Q1, and the second switching transistor Q2, the first Zener diode ZD1, the first switching transistor Q1, and the second switching transistor Q2 can be immediately turned off when overcurrent occurs in the cell 110, so that the loop between the positive electrode and the negative electrode of the cell 110 is disconnected, to implement overcurrent protection for the cell 110. In a process of implementing overcurrent protection for a cell by using an operational amplifier, a Hall current sensor, or a transformer, these components cause a slow response speed, a large size, and high costs. Compared with these components, components used in this embodiment of this application have a faster response speed, a smaller size, and lower costs, so that overcurrent protection for the cell 110 can be implemented with a fast response speed, a simple circuit topology, and low costs.

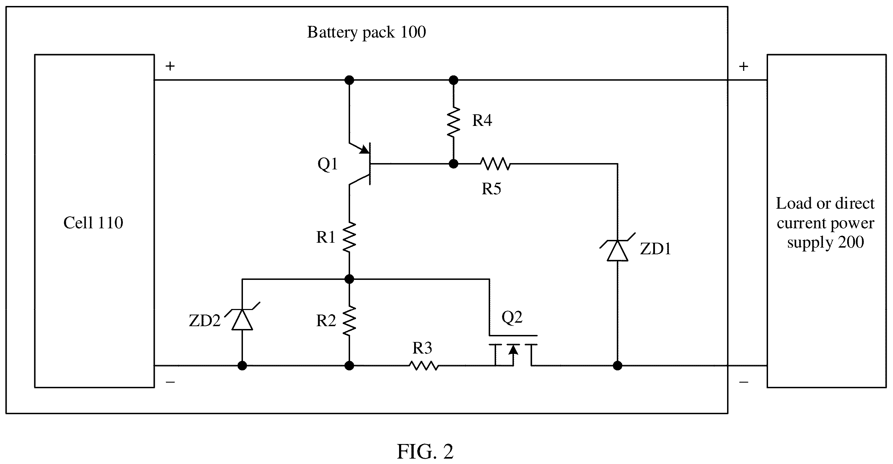

In a possible embodiment, FIG. 2 is a schematic of a circuit topology of the battery pack 100 according to an embodiment of this application. The battery pack 100 further includes a second Zener diode ZD2, an anode of the second Zener diode ZD2 is connected to the negative electrode of the cell 110, and a cathode of the second Zener diode ZD2 is connected to the gate of the second switching transistor Q2.

According to the battery pack 100 provided in this embodiment of this application, the second Zener diode ZD2 can protect the second switching transistor Q2, so that reliability of the battery pack 100 can be improved. For example, when no overcurrent occurs in the cell 110, the direct current power supply charges the cell 110 or the cell 110 discharges to the load, and a voltage between the positive electrode and the negative electrode of the cell 110 is overvoltage or fluctuates, the second Zener diode ZD2 may stably apply a voltage to the gate of the second switching transistor Q2, thereby protecting the second switching transistor Q2.

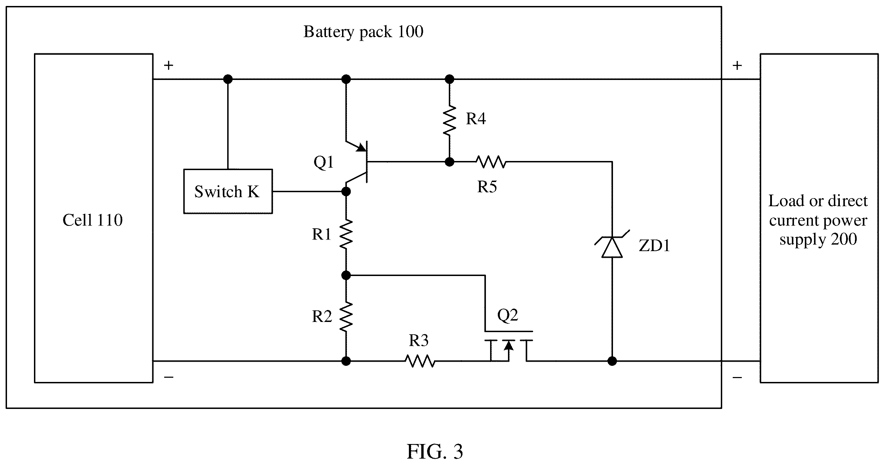

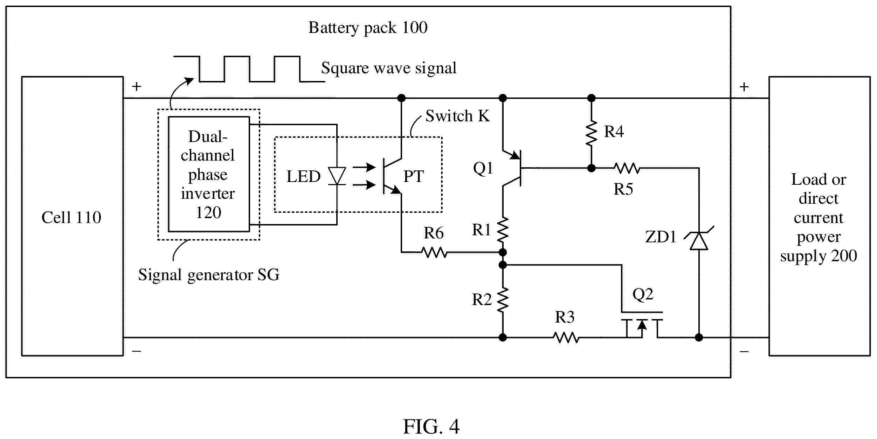

In a possible embodiment, FIG. 3 is a schematic of another circuit topology of the battery pack 100 according to an embodiment of this application. The battery pack 100 further includes a switch K, and the switch K is connected between the positive electrode of the cell 110 and the collector of the first switching transistor Q1. Alternatively, FIG. 4 is a schematic of still another circuit topology of the battery pack 100 according to an embodiment of this application. The battery pack 100 further includes a switch K and a sixth resistor R6 that are connected in series, and the switch K and the sixth resistor R6 are connected in series between the positive electrode of the cell 110 and the gate of the second switching transistor Q2. Refer to FIG. 3 or FIG. 4. When overcurrent occurs in the cell 110, the second switching transistor Q2 is turned off, and the overcurrent phenomenon of the cell 110 disappears after a period of time, the second switching transistor Q2 can be turned on by turning on the switch K, to restore a normal operating state of the cell 110.

In a possible embodiment, the switch K and the sixth resistor R6 that are connected in series include: one end of the sixth resistor R6 is connected to the positive electrode of the cell 110, the other end of the sixth resistor R6 is connected to one end of the switch K, and the other end of the switch K is connected to the gate of the second switching transistor Q2. Refer to FIG. 4. Alternatively, one end of the switch K is connected to the positive electrode of the cell 110, the other end of the switch K is connected to one end of the sixth resistor R6, and the other end of the sixth resistor R6 is connected to the gate of the second switching transistor Q2. A specific series connection manner between the switch K and the sixth resistor R6 is not limited in embodiments of this application. In this embodiment of this application, an example in which the specific series connection manner between the switch K and the sixth resistor R6 is the series connection manner shown in FIG. 4 is used for description. In the following embodiments of this application, an example in which the circuit topology of the battery pack 100 is the circuit topology of the battery pack 100 shown in FIG. 4 is used for description.

Still refer to FIG. 4. In a possible embodiment, the switch K is configured to be periodically turned on, so that the second switching transistor Q2 is periodically turned on.

For example, when overcurrent occurs in the cell 110 and the second switching transistor Q2 is turned off, the switch K is periodically turned on, so that the second switching transistor Q2 is periodically turned on. If the overcurrent phenomenon of the cell 110 disappears when the second switching transistor Q2 is turned on, the first Zener diode ZD1 and the first switching transistor Q1 are restored to turn-on, and the second switching transistor Q2 is not affected by the switch K anymore, and remains an on state, so that a loop can be formed between the positive electrode and the negative electrode of the cell 110, and the cell 110 can restore, in a timely manner, a normal operating state of charging or discharging. If the overcurrent phenomenon of the cell 110 does not disappear when the second switching transistor Q2 is turned on, the first Zener diode ZD1 and the first switching transistor Q1 continue to be turned off, and the second switching transistor Q2 continues to be turned on or off along with the switch K.

In a possible embodiment, the switch K is an optical coupler, or the switch K may include a switching transistor. A specific type of the switch K is not limited in embodiments of this application. In this embodiment of this application, an example in which the switch K is an optical coupler is used for description.

Refer to FIG. 4. For example, when the switch K is an optical coupler, the switch K includes a light emitting diode (light emitting diode, LED) LED and a phototriode (phototriode, PT) PT, and the phototriode PT may also be referred to as a phototransistor. Compared with the switching transistor, the optical coupler can isolate a strong-current (high voltage and high current) circuit between the positive electrode and the negative electrode of the cell 110 from a weak-current (low voltage and low current) circuit at a controlled end of the optical coupler, so that interference caused by the strong-current circuit to the weak-current circuit can be reduced, and stability of the battery pack 100 can be improved.

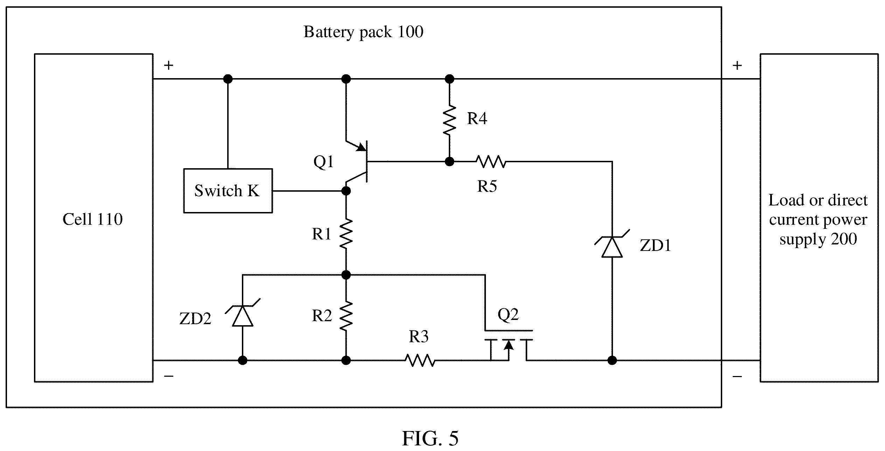

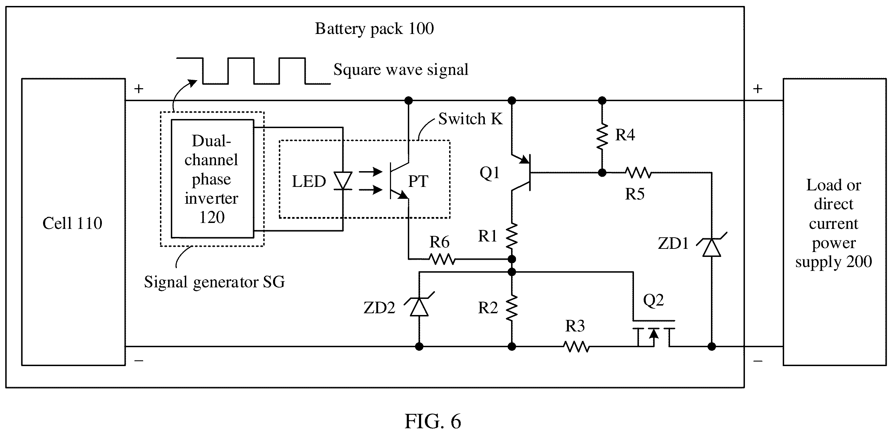

In a possible embodiment, as shown in FIG. 5, the battery pack 100 may include both the second Zener diode ZD2 and the switch K. Alternatively, as shown in FIG. 6, the battery pack 100 may include both the second Zener diode ZD2, and the switch K and the sixth resistor R6 that are connected in series. This is not limited in embodiments of this application.

According to the battery pack 100 provided in this embodiment of this application, the switch K is periodically turned on, so that the second switching transistor Q2 is periodically turned on. In this case, the normal operating state of the cell 110 can be restored in a timely manner when the overcurrent occurs in the cell 110, the second switching transistor Q2 is turned off, and the overcurrent phenomenon of the cell 110 disappears after a period of time. In addition, the optical coupler is used as the switch K, so that the strong-current circuit and the weak-current circuit can be isolated, the interference caused by the strong-current circuit to the weak-current circuit can be reduced, and the stability of the battery pack 100 can be improved.

Still refer to FIG. 4. In a possible embodiment, the battery pack 100 further includes a signal generator (signal generator, SG) SG, an output end of the signal generator SG is connected to the controlled end of the switch K, and the signal generator SG is configured to generate a control signal, to control the switch K to be periodically turned on.

In a possible embodiment, the signal generator SG is a phase inverter (phase inverter), or the signal generator SG includes a microcontroller (microcontroller unit, MCU) or a digital signal processing (digital signal processing, DSP) chip. The microcontroller unit may also be referred to as a micro control unit or a single-chip microcomputer. This is not limited in embodiments of this application. In this embodiment of this application, an example in which the signal generator SG is a phase inverter and the phase inverter is a dual-channel phase inverter is used for description. Compared with using the MCU or a DSP as the signal generator SG, using the phase inverter as the signal generator SG does not need to design software, so that design complexity can be reduced; and a circuit is simple and small, so that costs of the battery pack 100 can be reduced.

Still refer to FIG. 4. For example, when the signal generator SG is a dual-channel phase inverter 120, two output ends of the dual-channel phase inverter 120 are connected to an anode and a cathode of the light emitting diode LED, and the dual-channel phase inverter 120 is configured to generate a square wave signal, to control periodic light emitting of the light emitting diode LED, so as to control the phototriode PT to be periodically turned on, so that the switch K is periodically turned on. A period of the square wave signal may be adjusted by changing a peripheral circuit of the dual-channel phase inverter 120, to adjust a period of turning on the switch K. For a specific process, refer to the conventional technology. Details are not described in embodiments of this application.

According to the battery pack 100 provided in this embodiment of this application, the signal generator SG generates a control signal to control the switch K to be periodically turned on, so that the second switching transistor Q2 is periodically turned on. In this case, the normal operating state of the cell 110 can be restored in a timely manner when the overcurrent occurs in the cell 110, the second switching transistor Q2 is turned off, and the overcurrent phenomenon of the cell 110 disappears after a period of time. In addition, the phase inverter is used as the signal generator SG, so that no software needs to be designed, and design complexity can be reduced; and a circuit is simple and small, so that costs of the battery pack 100 can be reduced.

Refer to FIG. 1. Based on this, an embodiment of this application further provides an energy storage system 300. The energy storage system 300 includes a battery pack 100 and a power converter 310 connected to the battery pack 100. A circuit topology of the battery pack 100 is a circuit topology of the battery pack 100 shown in any one of FIG. 1 to FIG. 6. The power converter 310 is configured to perform power conversion on a direct current output by a direct current power supply to supply power to the battery pack 100, or perform power conversion on a direct current output by the battery pack 100 to supply power to a load.

The foregoing detailed description of the battery pack 100 and beneficial effect analysis may be correspondingly introduced to the energy storage system 300. Details are not described in embodiment of this application again.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A battery pack, comprising:
a cell;
a first switching transistor, a first resistor, and a second resistor, wherein an emitter or a source of the first switching transistor is connected to a positive electrode of the cell, and the first resistor and the second resistor are connected in series between a collector or a drain of the first switching transistor and a negative electrode of the cell; and
a third resistor, a second switching transistor, a first Zener diode, a fourth resistor, and a fifth resistor, wherein the third resistor is connected between the negative electrode of the cell and an emitter or a source of the second switching transistor, a collector or a drain of the second switching transistor is connected to an anode of the first Zener diode, the fourth resistor and the fifth resistor are connected in series between a cathode of the first Zener diode and the positive electrode of the cell, a connection point between the first resistor and the second resistor is connected to a base or a gate of the second switching transistor, a connection point between the fourth resistor and the fifth resistor is connected to a base or a gate of the first switching transistor, and the positive electrode of the cell and the anode of the first Zener diode are configured to connect to a load or direct current power supply;
wherein the first switching transistor is a PNP transistor, a PMOS, or a PIGBT; and
the second switching transistor is an NMOS or an NIGBT.

2. The battery pack according to claim 1, wherein the battery pack further comprises a second Zener diode, an anode of the second Zener diode is connected to the negative electrode of the cell, and a cathode of the second Zener diode is connected to the base or the gate of the second switching transistor.

3. The battery pack according to claim 1 or 2, wherein the battery pack further comprises a switch, and the switch is connected between the positive electrode of the cell and the collector or the drain of the first switching transistor.

4. The battery pack according to claim 1 or 2, wherein the battery pack further comprises a switch and a sixth resistor, and the switch and the sixth resistor are connected in series between the positive electrode of the cell and the base or the gate of the second switching transistor.

5. The battery pack according to claim 3 or 4, wherein
the switch is configured to be periodically turned on, to periodically turn on the second switching transistor.

6. The battery pack according to any one of claims 3 to 5, wherein the switch is an optical coupler.

7. The battery pack according to any one of claims 3 to 6, wherein the battery pack further comprises a signal generator, an output end of the signal generator is connected to a controlled end of the switch, and the signal generator is a phase inverter.

8. An energy storage system, wherein the energy storage system comprises a battery pack according to any one of claims 1 to 7 and a power converter connected to the battery pack, and the power converter is configured to perform power conversion on a direct current output by the battery pack.
